# EUROPEAN PATENT SPECIFICATION

(11) **EP 3 078 559 B1**
(45) Date of publication and mention of the grant of the patent: **05.09.2018**
(21) Application number: 16164328.3
(22) Date of filing: 07.04.2016
(51) Int. Cl.: B60W 50/00, B60W 50/14, B60K 35/00, B60W 50/16

(54) **ENHANCING MOTOR VEHICLE DRIVER AWARENESS OF MOTOR VEHICLE DEGREE OF PROXIMITY TO A MOTOR VEHICLE ROADHOLDING LIMIT DURING SPORTS DRIVING**
VERBESSERUNG DES KRAFTFAHRZEUGFAHRERBEWUSSTSEINS ÜBER DEN PROXIMITÄTSGRAD DES KRAFTFAHRZEUGS ZU EINER KRAFTFAHRZEUGSTRASSENLAGENGRENZE WÄHREND DES SPORTLICHEN FAHRENS
AMÉLIORATION DE LA PRISE DE CONSCIENCE DU CONDUCTEUR DU DEGRÉ DE PROXIMITÉ DU VÉHICULE AUTOMOBILE AVEC UNE LIMITE DE TENUE DE ROUTE DU VÉHICULE AUTOMOBILE PENDANT UNE CONDUITE SPORTIVE

(30) Priority: 07.04.2015 IT TO20150204
(43) Date of publication of application: 12.10.2016
(73) Proprietor: FCA Italy S.p.A., 10135 Torino (IT)
(72) Inventor: COLONNA DI PALIANO, Ascanio, 10135 Torino (IT)
(74) Representative: Bergadano, Mirko

(56) References cited:
- EP-A1- 2 161 641
- EP-A1- 2 463 172
- EP-A1- 2 672 275
- DE-A1- 4 314 826
- DE-A1- 10 341 846
- DE-A1-102004 030 997
- DE-A1-102009 027 026
- DE-A1-102009 041 194
- "G-Force / Kräfte messen", Christophorus - Das Porsche-Magazin - #357, 1 August 2012 (2012-08-01), pages 62-63, XP055232605, Retrieved from the Internet: URL:http://files.porsche.com/filestore.asp x/Porsche-Download.pdf?pool=germany&type=d ownload&id=christophorus-357-62&lang=none& filetype=default&version=3eeddc92-a589-49e 0-a93e-75217098460c [retrieved on 2015-12-01]
- "G-force display", Porsche 911 iManual 2012, 1 August 2012 (2012-08-01), XP055232613, Retrieved from the Internet: URL:http://www.porscheownersmanuals.com/20 12-911-carrera/6/114-11063/GForce-display [retrieved on 2015-12-01]

## Description

### Technical Field of the Invention

The present invention relates to enhancing motor vehicle driver awareness of motor vehicle degree of proximity to a motor vehicle roadholding limit during sports driving.

### State of the Art

As is known, the automotive design field is increasingly directed towards technologies that enhance interactivity between the driver and the motor vehicle and for this reason drivers increasingly feel the need to have full real-time awareness of the operating status of the motor vehicle they are driving.

To this purpose, modern motor vehicles are equipped with human-machine interfaces (HMIs) through which the driver can interact with on-board motor vehicle systems and receive a wide variety of information about the operating status of the motor vehicle.

EP 2 672 275 A1 discloses a vehicular display device which displays both a magnitude of an acceleration which currently acts on the motor vehicle measured by an acceleration sensor and also a magnitude of an acceleration measured by the acceleration sensor the last time that the electronic stability control acted on the wheels of the motor vehicle to apply a braking force.

The driver of the motor vehicle thus becomes aware that a critical state of behaviour of the motor vehicle has occurred and knows the acceleration that was acting on the motor vehicle when the electronic stability control last operated. In addition, by comparing the current acceleration acting on the motor vehicle with the acceleration that was acting when the electronic stability control was activated, the driver can understand or predict, to a certain extent, the possibility that the electronic stability skid prevention controller will be activated.

DE 10 2009 041194 A1 describes a display instrument comprising a graphical display device for displaying information on driving conditions including acceleration or location information connected with acceleration information.

DE 103 41 846 A1 describes a device for displaying the instantaneous state of acceleration of a motor vehicle, represented as a graphic mark in a two-dimensional coordinate system. The magnitude of acceleration in the direction of travel is shown on the vertical coordinate, while the value of acceleration in the transverse direction is shown on the horizontal coordinate.

DE 43 14 826 A1 describes a method for determining the adhesion margin of a motor vehicle and for the generation of warnings to the driver. The method comprises determining the adhesion potential and detecting the driving state of the vehicle, determining the ratio of the driving state to a driving limit determined by the adhesion potential and appropriate for the driving situation, and simultaneously, evaluating the current adhesion potential and computing a recommended maximum speed based on the adhesion potential and reporting to the driver if the recommended maximum speed is exceeded. By means of higher warning thresholds for longitudinal vehicle accelerations, the driver is not distracted by a warning in the event of emergency braking, nor bothered by superfluous warnings in the event of sharp acceleration.

DE 10 2004 030997 A1 describes a motor vehicle driving assistance system for driving at high speed, comprising a navigation system to recognise a predetermined road profile, a calculation unit for calculating an optimum steering profile for high speed driving at least on the basis of the navigation data, and an instructions unit to produce an instruction to maintain the optimum steering profile.

"G-Force / Krafte messen", Christophorus - Das Porsche-Magazin - #357, 1 August 2012 (2012-08-01), pages 62-63, XP055232605, and "G-Force display", Porsche 911 iManual 2012, 1 August 2012 (2012-08-01), XP055232613 describe automotive display devices that provide graphic information about lateral and longitudinal accelerations acting on the motor vehicle.

### Subject and Summary of the Invention

The Applicant has noted that the prior art solutions, although satisfactory in providing guidance on the lateral and longitudinal accelerations acting on the motor vehicle, are however unsatisfactory in providing information that is easily and immediately appreciable by the driver so as to enable him/her to gain a full awareness of the degree of proximity of the motor vehicle to a motor vehicle roadholding limit during sports driving.

The purpose of the present invention is to provide a new automotive system which, in a simple and intuitive way, allows a driver to have a full awareness of the degree of proximity of the motor vehicle to a motor vehicle roadholding limit during sports driving, during which the Advanced Driver Assistance Systems (ADAS) of the motor vehicle are usually inoperative.

According to the present invention, an automotive electronic control unit is therefore provided, which is programmed to enhance motor vehicle driver awareness of motor vehicle degree of proximity to a motor vehicle roadholding limit during sports driving, as claimed in the appended claim 1.

### Brief Description of the Drawings

Figure 1 depicts an automotive electronic system according to the invention, which is configured to enhance motor vehicle driver awareness of motor vehicle degree of proximity to a motor vehicle roadholding limit during sports driving.
Figure 2 depicts a graphical representation displayed on a motor vehicle electronic display to enhance motor vehicle driver awareness of motor vehicle degree of proximity to a motor vehicle roadholding limit during sports driving.

### Detailed Description of Preferred Embodiments of the Invention

The present invention will now be described in detail with reference to the attached figure to allow a skilled person to embed and use it. Various modifications to the described embodiments will be readily apparent to skilled persons and the generic principles described may be applied to other embodiments and applications without departing from the protective scope of the present invention as claimed in the appended claims. Therefore, the present invention should not be regarded as limited to the embodiments described and illustrated, it should instead be granted the widest scope consistent with the principles and characteristics described and claimed herein.

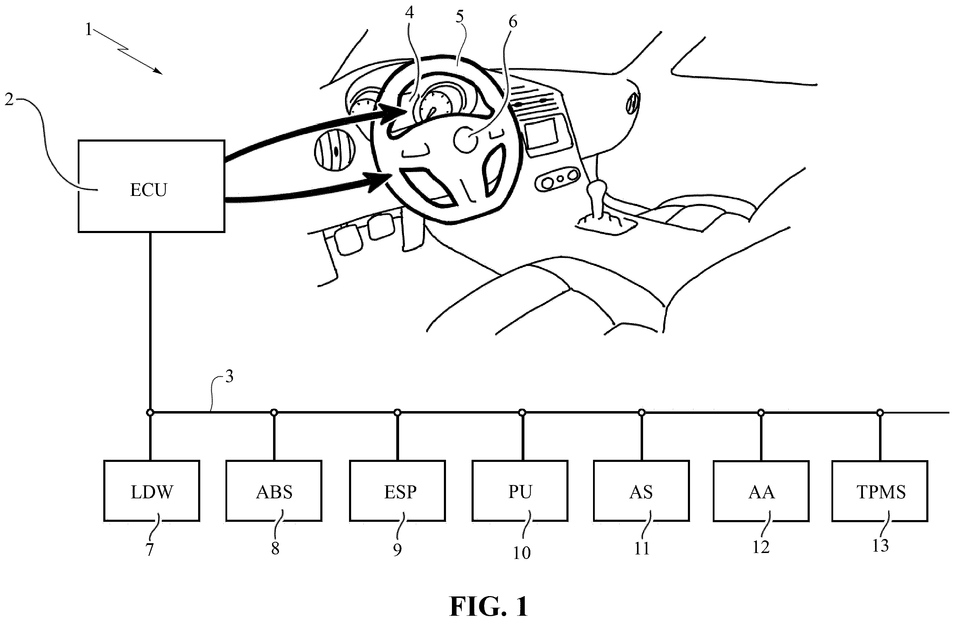

Figure 1 depicts an automotive electronic system, which is designated as a whole by reference numeral 1 and is configured to enhance motor vehicle driver awareness of motor vehicle degree of proximity to a motor vehicle roadholding limit during sports driving.

The automotive electronic system 1 essentially comprises an automotive electronic control unit 2 configured to be connected to various automotive sensors, electronic control units and systems through an automotive on-board communication network 3, for example CAN, FlexRay or other, with which it communicates to receive motor vehicle-related data necessary to perform the functions and tasks for which it is programmed and to output resulting commands.

As shown in Figure 1, the automotive electronic control unit 2 communicates with:
- a visual feedback device 3, in the example illustrated in the form of a screen display, for example of the TFT type, arranged in the instrument cluster 4, between an odometer and an engine revolution counter, and on which a graphical representation is provided which is designed to enhance, together with haptic feedbacks provided on a motor vehicle steering wheel 5, motor vehicle driver awareness of motor vehicle degree of proximity to a motor vehicle roadholding limit during sports driving, as described in detail below;
- a haptic feedback device 6, in the form of actuators conveniently associated with the motor vehicle steering wheel 5, forming part of a Lane Departure Warning (LDW) system 7, and operable to supply the driver, together with the graphical representation shown on the visual feedback device 4, haptic or force feedbacks that enhance the motor vehicle driver awareness of the motor vehicle degree of proximity to a motor vehicle roadholding limit during sports driving, as described in detail below;
- an Anti-lock Braking System (ABS) electronic control unit 8;
- an Electronic Stability Program (ESP) electronic control unit 9;
- an engine electronic control unit 10;
- an active suspension electronic control unit 11;
- an active aerodynamics electronic control unit 12 (where present);
- a Lane Departure Warning (LDW) electronic control unit 7; and
- a Tyre Pressure Monitoring System (TPMS) electronic control unit 13.

According to the present invention, the automotive electronic control unit 2 is programmed to perform the following tasks:
- a main task, hereinafter also indicated by 'task A', to assist the motor vehicle driver in the search for the best performance in terms of maximum exit velocity from a bend, and
- a secondary task, hereinafter also indicated by 'task B', to assist the motor vehicle driver in learning ideal motor vehicle trajectories to follow in order to achieve the best performance.

To carry out the main task, the automotive electronic control unit 2 is programmed to inform the motor vehicle driver, via the visual feedback device 4, of the degree of proximity of the motor vehicle to the motor vehicle roadholding limit, beyond which the motor vehicle may lose adhesion.

The motor vehicle roadholding limit is computed by the automotive electronic control unit 2 based on current data indicating the status of the motor vehicle tyres, defined by tyre pressure and temperature, and the active suspension setup, defined by the active suspension hydraulic calibration, and on corresponding historical data relating to the last identifiable event of motor vehicle roadholding loss, which corresponds to the last intervention of the ABS and/or ESP.

To perform the secondary task, the automotive electronic control unit 2 is programmed to detect, through the analysis of the motor vehicle driver behavioural patterns, repetitive erroneous driving habits in which the motor vehicle moves away from ideal motor vehicle bend trajectories computed by the EPS electronic control unit 9 while driving and, based thereon, to provide the motor vehicle driver with a haptic feedback on the motor vehicle steering wheel 5 at times when the current bend motor vehicle trajectories differ from the ideal ones beyond a certain tolerance in such a way as to "pull" the front end of the vehicle towards the inside or the outside of the ideal motor vehicle bend trajectories. The magnitude of the haptic feedback is such as to be perceivable by the driver, but not to occasion a substantial change in the motor vehicle trajectory.

These times are identified by the automotive electronic control unit 2 with the support of data supplied by the ESP electronic control unit 9, i.e. by analysing the steering angle and the motor vehicle speed and acceleration in order to reconstruct the bend that is being dealt with and the point in the bend where the motor vehicle is located at a given time.

To perform the abovementioned tasks, the automotive electronic control unit 2 communicates with the ABS electronic control unit 8 and the ESP electronic control unit 9 to obtain historical and current data in order to:
- task A: measure current motor vehicle accelerations, i.e. an acceleration vector resulting from the accelerations acting on the motor vehicle longitudinal and transverse axes;
- task A: learn historical data on the motor vehicle acceleration conditions on the occasion of the last intervention of the ABS and/or ESP, with which a motor vehicle adhesion loss is associated;
- task B: identify motor vehicle deviation trends from ideal motor vehicle trajectories; and
- task B: identify the type of bend driven and the point at which the motor vehicle is located at a given time.

To carry out task A, the automotive electronic control unit 2 also communicates with the TPMS electronic control unit 13 to obtain data indicating the tyre operating conditions, such as tyre pressure and temperature.

To carry out task A, the automotive electronic control unit 2 also communicates with the active aerodynamics electronic control unit 12 to obtain data indicating the downforce on the front and rear motor vehicle axles in order to take the resulting effects into account in the computation.

The automotive electronic control unit 1 also communicates with the LDW electronic control unit 7, the LDW being equipped with actuators (force feedback) on the steering wheel 5, in order to:
- task A: provide a haptic feedback to the driver via the haptic feedback device 6, applying for example a vibration on the motor vehicle steering wheel 5, to communicate to the motor vehicle driver that the motor vehicle is approaching the motor vehicle roadholding limit; and
- task B: provide a haptic feedback to the driver via the haptic feedback device 6, generating angular forces on the steering wheel 5, to indicate to the motor vehicle driver that an ideal motor vehicle trajectory is inside or outside the current motor vehicle trajectory.

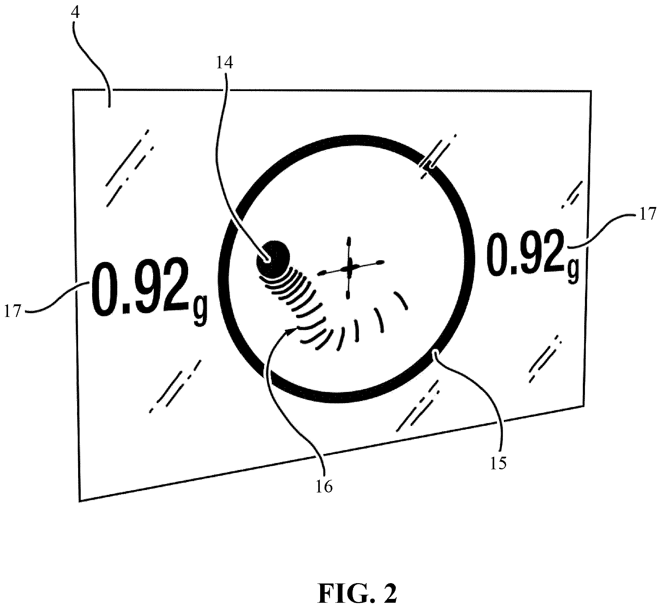

The automotive electronic control unit 2 is also programmed to cause the visual feedback device 4 to display a graphical representation, shown in Figure 2, that informs the motor vehicle driver, in a simple and intuitive way, via the ordinary peripheral vision:
- task A: the magnitude, orientation and direction of a resulting acceleration vector indicating the forces acting on the motor vehicle at a given time. This information is communicated to the motor vehicle driver by displaying a (circular) cursor 14 at an end of the acceleration vector. The acceleration vector magnitude is not absolute, but proportional to the motor vehicle roadholding limit, which is represented by a circumference 15 in which the cursor 14 is inscribed;
- task A: the degree of proximity of the motor vehicle to the motor vehicle roadholding limit, through different colourations of the circumference 15 in which the cursor 14 is inscribed. Two configurable thresholds, proportionate to the motor vehicle roadholding limit, define three different states: 'normal', 'close' and 'very close' to the roadholding limit. The two thresholds are calibrated in such a way that they are exceeded in a linear manner in normal operating conditions of sports driving, and that the last threshold is consistently spaced from the motor vehicle roadholding limit so as to switch on the ESP warning light (flashing amber) as a third threshold of actually exceeding the limit;

- task A: the history of the positions assumed by the cursor, displaying a semi-permanent trace 16 remaining visible for a certain time, for example 10 seconds, showing the cursor positions;
- task A: the absolute peak values of the lateral acceleration reached, via numerical values 17 expressed in "g" (9.8 m/s²) - one for each side/bend direction - to appear during significant conditions, for example when the colouration of the circumference 15 indicates a degree 'very close' to the motor vehicle roadholding limit and remain visible for a certain time, for example 10 seconds, so as to enable the motor vehicle driver to read the value safely at the conclusion of the steering manoeuvre.

From an examination of the characteristics of the present invention it is evident that this allows the motor vehicle driver to have, through an interface that is particularly simple and intuitive, a full awareness of motor vehicle degree of proximity to a motor vehicle roadholding limit during sports driving.

## Claims

1. An automotive electronic control unit (2) designed to be connected, via an automotive communication network (3), to:
• an anti-lock braking system (ABS) electronic control unit (8),
• an electronic stability program (ESP) electronic control unit (9),
• an engine electronic control unit (10),
• an active suspension electronic control unit (11),
• an active aerodynamics electronic control unit (12),
• a lane departure warning (LDW) electronic control unit (7), and
• a tyre pressure monitoring system (TPMS) electronic control unit (13),
to receive and process motor vehicle-related data to enhance motor vehicle driver awareness of a motor vehicle degree of proximity to a motor vehicle roadholding limit;
the automotive electronic control unit (2) is further designed to be connected, via the automotive communication network (3), to:
• a visual feedback device (3), comprising a screen display, and
• a haptic feedback device (6) comprising one or more actuators associated with a motor vehicle steering wheel (5) and forming part of a lane departure warning (LDW) system,
to cause graphical representations to be displayed on the screen display, and vibrations to be generated on the motor vehicle steering wheel (5), to enhance the motor vehicle driver awareness of the motor vehicle degree of proximity to a motor vehicle roadholding limit;
the automotive electronic control unit (2) is programmed to:
- compute current accelerations to which a motor vehicle is subject,
- compute the motor vehicle roadholding limit, and
- cause the automotive visual and haptic feedback devices (4) to provide a driver with visual and haptic feedbacks indicating the motor vehicle degree of proximity to the motor vehicle roadholding limit;
wherein the automotive electronic control unit is further programmed to:
- compute the motor vehicle roadholding limit based on:
∘ current data from the tyre pressure monitoring system (TPMS) electronic control unit (13) and indicating a motor vehicle tyre condition, defined by tyre pressure and temperature, current data from the active suspension electronic control unit (11) and indicating a motor vehicle active suspension setup, defined by active suspension hydraulic calibration, and current data from the active aerodynamics electronic control unit (12) and indicating a downforce on front and rear motor vehicle axles, and
∘ corresponding historical data from the an anti-lock braking system (ABS) electronic control unit (8) and the electronic stability program (ESP) electronic control unit (9) and indicating a motor vehicle roadholding loss, which corresponds to an intervention of a motor vehicle anti-lock braking (ABS) system (8) and/or an electronic stability control (ESP) system (9);
- analyse motor vehicle driver behavioural patterns to identify incorrect driving behaviours in which the motor vehicle moves away from ideal motor vehicle trajectories computed by the electronic stability program (EPS) electronic control unit (9) during driving;
- cause the automotive haptic feedback device (6) to provide the driver with haptic feedbacks indicative that the current motor vehicle trajectory differs from the ideal motor vehicle trajectories in the form of angular forces applied to the motor vehicle steering wheel (5); wherein the haptic feedbacks are provided during the current motor vehicle trajectories at times computed by the automotive electronic control unit (2) based on data supplied by the electronic stability program (EPS) electronic control unit (9) and comprising the steering angle and the motor vehicle speed and acceleration, which data are used by the automotive electronic control unit (2) to reconstruct the bend that is being travelled and the point in the bend where the motor vehicle is currently located;
- cause the automotive visual feedback device (4) to display a graphical representation of the motor vehicle roadholding limit, and of the magnitude, orientation and direction of an acceleration vector resulting from the current accelerations to which the motor vehicle is subject; wherein the graphical representation comprises a circumference (15) representing the motor vehicle roadholding limit, and a cursor (14) inscribed in the circumference (15) and representing the magnitude, orientation and direction of the acceleration vector; and wherein the acceleration vector magnitude is proportional to the motor vehicle roadholding limit;
- cause the automotive visual feedback device (4) to display a graphical representation of the motor vehicle degree of proximity to the motor vehicle roadholding limit; wherein the graphical representation comprises different colourings of the circumference (15) for different motor vehicle degrees of proximity to the motor vehicle roadholding limit; wherein two calibratable thresholds, proportionate to the motor vehicle roadholding limit, are provided to define three different motor vehicle degrees of proximity to the motor vehicle roadholding limit, to which three different colourings of the circumference (15) are associated, and wherein the two calibratable thresholds are calibrated in such a way that they are exceeded linearly during sports driving, and that the threshold closer to the motor vehicle roadholding limit is consistently spaced therefrom so as to result in the actual crossing of the motor vehicle roadholding limit being visually signalled by the switching on of the electronic stability program (ESP) warning light;
- cause the automotive visual feedback device (4) to display a graphical representation of cursor positions in a certain time interval; wherein the graphical representation comprises a semi-permanent track (16) formed by the cursor positions, wherein each cursor position is maintained displayed for a certain time period; and
- cause the automotive visual feedback device (4) to display and maintain displayed for a certain time period motor vehicle lateral acceleration peak values (17), one per side/bend direction, at time instants in which the colouring of the circumference (15) is indicative of a high motor vehicle degree of proximity to the motor vehicle roadholding limit, to allow the driver to read the peak values displayed safely at the conclusion of the bend.

## Patentansprüche

1. Elektronische Fahrzeugsteuereinheit (2), die ausgelegt ist, um über ein Fahrzeugkommunikationsnetzwerk (3) verbunden zu werden mit:
- einer elektronischen Steuereinheit (8) eines Anti-Blockierbremssystems (ABS),
- einer elektronischen Steuereinheit eines elektronischen Stabilitätsprogramms (ESP),
- einer elektronischen Steuereinheit (10) eines Motors,
- einer elektronischen Steuereinheit (11) einer aktiven Federung,
- einer elektronischen Steuereinheit (12) für aktive Aerodynamik,
- einer elektronischen Steuereinheit (7) für Fahrbahnabweichungswarnung (LDW = lane departure warning) und
- einer elektronischen Steuereinheit (13) eines Reifendrucküberwachungssystems (TPMS = tire pressure monitoring system),
um mit dem Motorfahrzeug in Beziehung stehende Daten zu empfangen und zu verarbeiten, um das Bewusstsein eines Fahrers des Motorfahrzeugs hinsichtlich des Grades, mit dem sich das Motorfahrzeug in der Nähe seiner Bodenhaftungsgrenze befindet, zu erhöhen;
wobei die elektronische Fahrzeugsteuereinheit (2) weiter ausgelegt ist, um über das Fahrzeugkommunikationsnetzwerk (3) verbunden zu werden mit:
- einer visuellen Rückmeldungsvorrichtung (3), die eine Bildschirmanzeige aufweist, und
- einer haptischen Rückmeldungsvorrichtung (6), die eine oder mehrere Betätigungsvorrichtungen aufweist, die mit einem Lenkrad (5) des Motorfahrzeugs assoziiert sind, und einen Teil eines Fahrbahnabweichungswarnsystems bzw. LDW-Systems bilden,
um zu bewirken, dass grafische Darstellungen auf der Bildschirmanzeige abgebildet werden, und dass Vibrationen an dem Lenkrad (5) des Motorfahrzeugs erzeugt werden, um das Bewusstsein eines Fahrers des Motorfahrzeugs hinsichtlich des Grades, mit dem sich das Motorfahrzeug in der Nähe seiner Bodenhaftungsgrenze befindet, zu erhöhen;
wobei die elektronische Fahrzeugsteuereinheit (2) programmiert ist, um:
- gegenwärtige Beschleunigungen zu berechnen, denen ein Motorfahrzeug unterworfen ist,
- die Bodenhaftungsgrenze des Motorfahrzeugs zu berechnen und
- zu bewirken, dass die visuellen und haptischen Rückmeldungsvorrichtungen (4) des Fahrzeugs einen Fahrer mit visuellen und haptischen Rückmeldungen versorgen, welche den Grad anzeigen, mit dem sich das Motorfahrzeug in der Nähe seiner Bodenhaftungsgrenze befindet;
wobei die elektronische Fahrzeugsteuereinheit weiter programmiert ist, um
- die Bodenhaftungsgrenze des Motorfahrzeugs zu berechnen, und zwar basierend auf:
° gegenwärtigen Daten von der elektronischen Steuereinheit (13) des Reifendrucküberwachungssystems (TPMS), und welche einen Reifenzustand des Motorfahrzeugs anzeigen, und zwar definiert durch Reifendruck- und -temperatur, gegenwärtige Daten von der elektronischen Steuereinheit (11) der aktiven Federung, die eine Einstellung der aktiven Federung des Motorfahrzeugs anzeigen, die durch hydraulische Kalibrierung der aktiven Federung definiert ist, und gegenwärtige Daten von der elektronischen Steuereinheit (12) für aktive Aerodynamik, die eine Anpresskraft auf die vorderen und hinteren Achsen des Motorfahrzeugs anzeigt, und
° entsprechenden historischen Daten von der elektronischen Steuereinheit (8) des Anti-Blockiersystems (ABS) und der elektronischen Steuereinheit (9) des elektronischen Stabilitätsprogramms (ESP), die einen Verlust der Bodenhaftung des Motorfahrzeugs anzeigen, was einer Intervention eines Anti-Blockier- bzw. ABS-Systems (8) des Motorfahrzeugs und/oder eines elektronischen Stabilitätssteuerungs- bzw. ESP-Systems (9) entspricht;
- Verhaltensmuster des Fahrers des Motorfahrzeugs zu analysieren, um unkorrekte Verhaltensweisen beim Fahren zu identifizieren, bei denen das Motorfahrzeug sich von irgendwelchen idealen Trajektorien bzw. Bahnen des Motorfahrzeugs weg bewegt, die durch die elektronische Steuereinheit (9) des elektronischen Stabilitätsprogramms (ESP) während des Fahrens berechnet wurden;
zu bewirken, dass die haptische Rückmeldungsvorrichtung (6) des Fahrzeugs dem Fahrer mit haptischen Rückmeldungen versorgt, welche Anzeigen, dass die gegenwärtige Bahn des Motorfahrzeugs von den idealen Bahnen des Motorfahrzeugs abweicht und zwar in Form von Winkelkräften, die auf das Lenkgrad (5) des Motorfahrzeugs aufgebracht werden; wobei die haptischen Rückmeldungen während der gegenwärtigen Bahnen des Motorfahrzeugs zu Zeitpunkten vorgesehen werden, die durch die elektronische Fahrzeugsteuereinheit (2) basierend auf Daten berechnet wurden, die von der elektronischen Steuereinheit (9) des elektronischen Stabilitätsprogramms (ESP) geliefert wurden und den Lenkwinkel und die Geschwindigkeit und die Beschleunigung des Motorfahrzeugs aufweisen, wobei diese Daten von der elektronischen Fahrzeugsteuereinheit (2) verwendet werden, um die Kurve zu rekonstruieren, die Durchfahren wird, und auch den Punkt auf der Kurve, wo das Motorfahrzeug gegenwärtig angeordnet ist;
- zu bewirken, dass die visuelle Rückmeldungsvorrichtung (4) des Fahrzeugs eine grafische Darstellung der Bodenhaftungsgrenze des Motorfahrzeugs und der Größe, Orientierung und Richtung eines Beschleunigungsvektors anzeigt, welcher aus den gegenwärtigen Beschleunigungen resultiert, denen das Motorfahrzeug unterworfen ist; wobei die grafische Darstellung einen Umfang (15) aufweist, welcher die Bodenhaftungsgrenze des Motorfahrzeugs darstellst und wobei ein Cursor bzw. Zeiger (14) in dem Umfang (15) eingeschrieben bzw. enthalten ist, und die Größe, Orientierung und Richtung des Beschleunigungsvektors darstellt; und wobei die Größe des Beschleunigungsvektors proportional zur Bodenhaftungsgrenze des Motorfahrzeugs ist;
- zu bewirken, dass die visuelle Rückmeldungsvorrichtung (4) des Fahrzeugs eine grafische Darstellung des Grades anzeigt, mit welchem das Motorfahrzeug in der Nähe seiner Bodenhaftungsgrenze ist; wobei die grafische Darstellung unterschiedliche Färbungen des Umfangs (15) für unterschiedliche Grade aufweist, mit denen das Motorfahrzeug in der Nähe seiner Bodenhaftungsgrenze ist; wobei zwei kalibrierbare Schwellen proportional zur Bodenhaftungsgrenze des Motorfahrzeugs vorgesehen sind, um drei unterschiedliche Grade zu definieren, in denen das Motorfahrzeug in der Nähe der Bodenhaftungsgrenze des Motorfahrzeugs ist, wobei mit diesen drei unterschiedliche Färbungen des Umfangs (15) assoziiert sind, und wobei die zwei kalibrierbaren Schwellen auch derart kalibriert sind, dass sie linear während einer Sportfahr-Einstellung überschritten werden, und so dass die Schwelle, die näher an der Bodenhaftungsgrenze des Motorfahrzeugs ist, in konsistenter Weise davon beabstandet ist, so dass das tatsächliche Überschreiten der Bodenhaftungsgrenze des Motorfahrzeugs das Ergebnis hat, dass die visuell durch das Anschalten des Warnlichtes für das elektronische Stabilitätsprogramm (ESP) signalisiert wird;
- zu bewirken, dass die visuelle Rückmeldungsvorrichtung (4) des Fahrzeugs eine grafische Darstellung von Cursor-Positionen in einem gewissen Zeitintervall anzeigt; wobei die grafische Darstellung eine semipermanente Spur (16) aufweist, welche durch die Cursor-Positionen gebildet wird, wobei jede Cursor-Position in gehaltener Weise für eine gewisse Zeitperiode angezeigt wird; und
- zu bewirken, dass die visuelle Rückmeldungsvorrichtung (4) des Fahrzeugs Spitzenwerte (17) der Seitenbeschleunigung des Motorfahrzeugs anzeigt, und für eine gewisse Zeitperiode angezeigt hält, und zwar einen pro Seiten/Kurvenrichtung, und zwar zu Zeitpunkten, bei denen die Färbung des Umfangs (15) anzeigt, dass das Motorfahrzeug in hohem Grad nahe der Bodenhaftungsgrenze des Motorfahrzeugs ist, um dem Fahrer zu gestatten, die angezeigten Spitzenwerte sicher am Ende der Kurve abzulesen.

## Revendications

1. Unité de commande électronique d'automobile (2) conçue de sorte qu'elle soit connectée, via un réseau de communication d'automobile (3), à :
• une unité de commande électronique de système de freinage antiblocage (ABS) (8) ;
• une unité de commande électronique de programme de stabilité électronique (ESP) (9) ;
• une unité de commande électronique de moteur (10) ;
• une unité de commande électronique de suspension active (11) ;
• une unité de commande électronique d'aérodynamique active (12) ;
• une unité de commande électronique d'avertissement de sortie de voie (LDW) (7) ; et
• une unité de commande électronique de système de surveillance de pression de pneumatique (TPMS) (13) ;
pour recevoir et traiter des données rapportées à un véhicule à moteur afin d'améliorer la prise de conscience par un conducteur de véhicule à moteur d'un degré de proximité du véhicule à moteur par rapport à une limite de tenue de route du véhicule à moteur ;
l'unité de commande électronique d'automobile (2) est en outre conçue de sorte qu'elle soit connectée, via le réseau de communication d'automobile (3), à :
• un dispositif de retour visuel (3), qui comprend un affichage par écran ; et
• un dispositif de retour haptique (6) qui comprend un ou plusieurs actionneur(s) qui est/sont associé(s) à un volant de direction de véhicule à moteur (5) et qui fait/font partie d'un système d'avertissement de sortie de voie (LDW) ;
pour provoquer l'affichage de représentations graphiques sur l'affichage par écran et pour provoquer la génération de vibrations sur le volant de direction de véhicule à moteur (5), afin d'améliorer la prise de conscience par le conducteur de véhicule à moteur du degré de proximité du véhicule à moteur par rapport à une limite de tenue de route du véhicule à moteur ;
l'unité de commande électronique d'automobile (2) est programmée pour :
- calculer des accélérations courantes auxquelles un véhicule à moteur est soumis ;
- calculer la limite de tenue de route du véhicule à moteur ; et
- forcer les dispositifs de retours visuel et haptique d'automobile (4) à fournir à un conducteur des retours visuels et haptiques qui indiquent le degré de proximité du véhicule à moteur par rapport à la limite de tenue de route du véhicule à moteur ; dans lequel :
l'unité de commande électronique d'automobile est en outre programmée pour :
- calculer la limite de tenue de route du véhicule à moteur sur la base :
∘ de données courantes qui proviennent de l'unité de commande électronique de système de surveillance de pression de pneumatique (TPMS) (13) et qui indiquent une condition de pneumatique du véhicule à moteur, laquelle condition est définie par la pression et la température du pneumatique, de données courantes qui proviennent de l'unité de commande électronique de suspension active (11) et qui indiquent une configuration de suspension active du véhicule à moteur, laquelle configuration est définie par un étalonnage hydraulique de suspension active, et de données courantes qui proviennent de l'unité de commande électronique d'aérodynamique active (12) et qui indiquent une force descendante qui est exercée sur des essieux avant et arrière du véhicule à moteur ; et
∘ de données historiques correspondantes qui proviennent de l'unité de commande électronique de système de freinage antiblocage (ABS) (8) et de l'unité de commande électronique de programme de stabilité électronique (EPS) (9) et qui indiquent une perte de tenue de route du véhicule à moteur, correspondant à une intervention d'un système de freinage antiblocage (ABS) du véhicule à moteur (8) et/ou d'un système de commande de stabilité électronique (ESP) (9);
- analyser des motifs de comportement de conducteur du véhicule à moteur afin d'identifier des comportements de conduite incorrects selon lesquels le véhicule à moteur s'écarte de trajectoires idéales de véhicule à moteur qui sont calculées par l'unité de commande électronique de programme de stabilité électronique (EPS) (9) pendant la conduite ;
- forcer le dispositif de retour haptique d'automobile (6) à fournir au conducteur des retours haptiques qui sont indicatifs du fait que la trajectoire courante du véhicule à moteur diffère de trajectoires idéales du véhicule à moteur sous la forme de forces angulaires qui sont appliquées sur le volant de direction du véhicule à moteur (5) ; dans lequel les retours haptiques sont fournis pendant les trajectoires courantes du véhicule à moteur à des instants qui sont calculés par l'unité de commande électronique d'automobile (2) sur la base de données qui sont fournies par l'unité de commande électronique de programme de stabilité électronique (EPS) (9) et qui comprennent l'angle de direction ainsi que la vitesse et l'accélération du véhicule à moteur, lesquelles données sont utilisées par l'unité de commande électronique d'automobile (2) pour reconstruire la courbe qui est en train d'être négociée et le point dans la courbe au niveau duquel le véhicule à moteur est présentement situé ;
- forcer le dispositif de retour visuel d'automobile (4) à afficher une représentation graphique de la limite de tenue de route du véhicule à moteur ainsi que de l'amplitude, de l'orientation et de la direction d'un vecteur d'accélération qui résulte des accélérations courantes auxquelles le véhicule à moteur est soumis ; dans lequel la représentation graphique comprend une circonférence (15) qui représente la limite de tenue de route du véhicule à moteur et un curseur (14) qui est inscrit dans la circonférence (15) et qui représente l'amplitude, l'orientation et la direction du vecteur d'accélération ; et dans lequel l'amplitude du vecteur d'accélération est proportionnelle à la limite de tenue de route du véhicule à moteur ;
- forcer le dispositif de retour visuel d'automobile (4) à afficher une représentation graphique du degré de proximité du véhicule à moteur par rapport à la limite de tenue de route du véhicule à moteur ; dans lequel la représentation graphique comprend des colorations différentes de la circonférence (15) pour différents degrés de proximité du véhicule à moteur par rapport à la limite de tenue de route du véhicule à moteur ; dans lequel deux seuils qui peuvent être étalonnés, lesquels seuils sont proportionnés à la limite de tenue de route du véhicule à moteur, sont prévus de manière à définir trois degrés de proximité différents du véhicule à moteur par rapport à la limite de tenue de route du véhicule à moteur, degrés auxquels trois colorations différentes de la circonférence (15) sont associées, et dans lequel les deux seuils qui peuvent être étalonnés sont étalonnés de telle sorte qu'ils soient excédés linéairement pendant une conduite sportive et de telle sorte que le seuil qui est plus proche de la limite de tenue de route du véhicule à moteur en soit espacé de façon systématique de manière à aboutir au fait que le croisement effectif de la limite de tenue de route du véhicule à moteur soit signalé visuellement au moyen de la commutation dans l'état d'activation du voyant d'avertissement de programme de stabilité électronique (ESP) ;
- forcer le dispositif de retour visuel d'automobile (4) à afficher une représentation graphique de positions de curseur dans un certain intervalle temporel ; dans lequel la représentation graphique comprend un tracé/une trace semi-permanent(e) (16) qui est formé (e) par les positions de curseur, dans lequel chaque position de curseur est maintenue affichée pendant une certaine période temporelle ; et
- forcer le dispositif de retour visuel d'automobile (4) à afficher et à maintenir affichées pendant une certaine période temporelle des valeurs de crête d'accélération latérale de véhicule à moteur (17), à raison d'une par direction latérale/de courbe, à des instants temporels auxquels la coloration de la circonférence (15) est indicative d'un degré de proximité élevé du véhicule à moteur par rapport à la limite de tenue de route du véhicule à moteur, pour permettre au conducteur de lire les valeurs de crête qui sont affichées en sécurité au terme de la négociation de la courbe.
